(19) Europäisches Patentamt

European Patent Office

Office européen des brevets

(11) Veröffentlichungsnummer: **0 634 676 A1**

(12) **EUROPÄISCHE PATENTANMELDUNG**

(21) Anmeldenummer: **94110880.5**

(22) Anmeldetag: **13.07.94**

(51) Int. Cl.⁶: **G02B 6/00**, G02B 6/42

(30) Priorität: **15.07.93 DE 4323681**

(43) Veröffentlichungstag der Anmeldung:
**18.01.95 Patentblatt 95/03**

(84) Benannte Vertragsstaaten:
**CH DE ES FR GB IT LI SE**

(71) Anmelder: **ROBERT BOSCH GMBH**
**Postfach 30 02 20**
**D-70442 Stuttgart (DE)**

(72) Erfinder: **Mueller-Fiedler, Roland, Dr.**
**Dipl.-Phys.**
**Riegelaeckerstrasse 2**
**D-71229 Leonberg (DE)**
Erfinder: **Benz, Gerhard, Dr.**
**Brucknerstrasse 8**
**D-71032 Boeblingen (DE)**

(54) **Anordnung zur Ankopplung wenigstens einer Lichtleitfaser an wenigstens ein optisches Empfangs- oder Sendeelement und ein Verfahren zur Herstellung der Anordnung.**

(57) Die Erfindung betrifft eine Anordnung zur Ankopplung wenigstens einer Lichtleitfaser an wenigstens ein optisches Empfangs- oder Sendeelement und ein Verfahren zu deren Herstellung, wobei in einfacher Weise eine Ankopplung ohne Zwischenschaltung irgendwelcher Signalübertragungseinrichtungen möglich sein soll.

Dazu ist vorgesehen, daß die Lichtleitfaser (26) und das optische Element (14, 40) an den gegenüberliegenden Seiten (12, 22) eines gemeinsamen Trägers (10) angeordnet sind.

Fig. 1

EP 0 634 676 A1

Die Erfindung betrifft eine Anordnung nach dem Oberbegriff des Anspruchs 1 und ein Verfahren zu deren Herstellung nach dem Oberbegriff des Anspruchs 23 und findet Anwendung bei der optischen Nachrichtentechnik, insbesondere bei der Wandlung optischer in elektrische bzw. elektrischer in optische Signale.

## Stand der Technik

In der optischen Nachrichtentechnik werden Empfangs- und/oder Sendemodule zur elektronischen Wandlung optischer Daten benötigt. Für diese elektronische Wandlung werden elektrooptische Wandlerelemente benötigt, bei denen eine Vielzahl von optischen und elektrischen Leitungen zu- und weggeführt werden müssen. Im zunehmenden Maße wird die Wandlung optisch/elektronisch für eine Vielzahl räumlich benachbarter Teilnehmer gemeinsam durchgeführt und jeder einzelne Teilnehmer muß über eine elektrische Anschlußleitung versorgt werden. Es ist auch denkbar, daß zunehmend auch jeder einzelne Endverbraucher in das optische Nachrichtennetz ein-gekoppelt werden soll und hier die Wandlung optisch/elektronisch entweder für mehrere Endverbraucher zentral erfolgt oder jeder Endverbraucher individuell eingebunden werden soll. Da die für die Wandlung eingesetzten optoelektronischen Bauelemente, beispielsweise Photodioden, zum Schutz vor Umwelteinflüssen wie beispielsweise Feuchtigkeit, Staub usw. in ein hermetisch dichtes Gehäuse angeordnet werden müssen, kommt der Ankopplung einer ankommenden Lichtleitfaser an die Photodiode eine besondere Bedeutung zu.

Hierzu ist bereits vorgeschlagen worden, die Lichtleitfaser durch eine Gehäusewand zu führen, wobei die Lichtleitfaser in eine Metallkapillare eingelötet wird, die in einer Bohrung der Gehäusewand fixiert werden kann. Hierbei ist neben dem erheblichen Arbeitsaufwand sehr nachteilig, daß wenn auf engstem Raum eine Vielzahl von Lichtleitfasern in ein Gehäuse eingekoppelt werden sollen, eine genaue Zuordnung einzelner Lichtleitfasern zu einem optoelektronischen Element sehr schwierig ist.

Weiterhin ist bereits vorgeschlagen worden, die die optoelektronischen Bauelemente aufnehmenden hermetischen Gehäuse auf einer Trägerplatte anzuordnen, wobei die Trägerplatte eine Pufferschicht aufweist, in die Wellenleiter strukturiert sind. Diese Wellenleiter werden aus dem Gehäuse herausgeführt und außerhalb des Gehäuses mit einer Lichtleitfaser gekoppelt, während die in dem Gehäuse liegenden Wellenleiterenden an die dort vorgesehenen optoelektronischen Bauelemente angekoppelt werden. Hierbei ist sehr nachteilig, daß einerseits zusätzliche Wellenleiterstrukturen geschaffen werden müssen und die Lichtleitfasern zusätzlich zu den Wellenleitern justiert und angeordnet werden müssen.

## Vorteil der Erfindung

Eine Anordnung mit den im Anspruch 1 genannten Merkmalen bietet demgegenüber den Vorteil, daß in einfacher Weise eine hermetische Lichtleitfaserdurchführung geschaffen werden kann, die ohne Zwischenschaltung zusätzlicher Wellenleiter auskommt. Dadurch daß die Lichtleitfaser und das optische Element an gegenüberliegenden Seiten eines gemeinsamen Trägers angeordnet sind, wobei der Träger vorzugsweise aus einem optisch-transparenten Material besteht, der gleichzeitig den Teil einer Gehäusewandung des hermetisch dichten Gehäuses bildet, können die über die Lichtleitfaser ankommenden Lichtsignale direkt zu den optischen oder elektrooptischen Elementen weitergeleitet werden. Es hat sich gezeigt, daß durch diese gefundene Anordnung möglich ist, daß das optische Element in einem hermetisch dichtem Gehäuse angeordnet sein kann und die Lichtsignale dieses optische Element erreichen können, ohne daß zusätzliche Durchführungen und/oder die Zwischenschaltung der Signalübertragung dienender Elemente notwendig ist.

Anstelle einer Empfangsdiode kann das optische Element ebenso gut ein Sendeelement sein, wobei bevorzugt eine oberflächenemittierende Senderdiode zum Einsatz kommen kann.

In bevorzugter Ausgestaltung der Anordnung ist vorgesehen, daß die Lichtleitfaser mit ihrer optischen Achse parallel zu den Seiten des Trägers angeordnet ist, wobei sehr vorteilhaft der Lichtleitfaser eine im Bereich der optischen Achse angeordnete Lichtstrahlumlenkeinrichtung zugeordnet ist. Hierdurch wird erreicht, daß die Lichtleitfaser sehr günstig, nämlich in Längsrichtung an dem Träger befestigt werden kann, d.h. es steht eine relativ große Fläche zur Führung und Justierung der Lichtleitfaser zur Verfügung und über die Lichtleitfaser ankommende Lichtsignale zu dem in dem Gehäuse angeordneten elekrooptischen Element umgelenkt werden können.

In weiterer bevorzugter Ausgestaltung der Anordnung ist vorgesehen, daß die Lichtstrahlumlenkeinrichtung eine der Lichtleitfaser zugewandte abgeschrägte Stirnfläche aufweist, die vorzugsweise in einem Winkel von 45° verläuft und verspiegelt ist, so daß in axialer Richtung ankommende Lichtsignale in einem definierten Winkel umgelenkt werden und so direkt auf die lichtempfindliche Fläche des elektrooptischen Elementes treffen kann.

In bevorzugter Ausgestaltung ist weiterhin vorgesehen, daß zwischen der Lichtstrahlumlenkeinrichtung und dem Träger wenigstens im Bereich der verspiegelten Abschrägung eine Antireflexionsschicht vorgesehen ist, die vorzugsweise einen Brechungsindex besitzt, der sich aus dem geometrischen Mittel der Brechungsindizes von Luft und des Trägers ergibt. Hierdurch wird sehr vorteilhaft erreicht, daß durch Reflexion bedingte optische Verluste an der Eintrittsseite des Trägers vermieden werden. Da bei einem elektrooptischen Empfangselement nur eine genau definierte Lichtwellenlänge eingesetzt wird, entfällt die Notwendigkeit einer breitbandigen Entspiegelung und die Antireflexionsschicht kann daher aus einer einzigen Schicht bestehen. Es besteht jedoch prinzipiell die Möglichkeit, auch ein Mehrschichtsystem zur Verbesserung der Entspiegelungseigenschaften einzusetzen.

In bevorzugter Ausgestaltung der Anordnung ist weiterhin vorgesehen, insbesondere wenn die Anordnung ein optoelektronisches Sendeelement enthält, daß auf der der Lichtleitfaser zugeordneten Seite des Trägers eine Fokussiereinrichtung angordnet ist, die die von dem elektrooptischen Bauelement ausgesandten optischen Signale bündelt und diese einem bestimmten Punkt der verspiegelten Abschrägung der Lichtstrahlumlenkeinrichtung zuführt, so daß die optischen Signale genau in die optische Achse der Lichtleitfaser eingespeist werden können.

Bei einer bevorzugten Ausgestaltung der Erfindung, insbesondere bei der Herstellung einer Anordnung zur Ankopplung von Lichtleitfasern an optische Empfangs- oder Sendeelemente, ist vorgesehen, daß auf einen optisch transparenten Träger, der vorzugsweise ein Siliciumsubstrat ist, an zwei gegenüberliegenden Seiten gleichzeitig einerseits Führungsstrukturen für die Lichtleitfasern und andererseits Haltestrukturen für die optischen Elemente eingearbeitet werden. Durch diese gleichzeitige Bearbeitung ist es sehr einfach möglich, genau vorherbestimmbare geometrische Zuordnungen der Lichtleitfasern und der optischen Elemente zu erreichen, die sicherstellen, daß vorzugsweise lediglich eine einmalige Lichtstrahlumlenkung erforderlich ist, damit die über die Lichtleitfasern ankommenden optischen Signale genau die lichtempfindliche Fläche des optischen Elementes treffen. Die Führungsstrukturen für die optischen Elemente können auch durch eine strukturierte Metallschicht erzeugt werden, so daß durch einen geeigneten Justage-Bondprozeß eine Selbstjustierung der optischen Bauelemente erreicht wird.

In bevorzugter Ausgestaltung des Verfahrens ist vorgesehen, daß die Führungsstrukturen für die Lichtleitfasern anisotrop eingeätzt werden, so daß sich in bekannter Weise V-förmige Führungsstrukturen ergeben, in die die Lichtleitfaser genau positionierbar sind. Zur Maskierung der Ätzmaske wird bevorzugt Siliciumnitrid eingesetzt, das gleichzeitig als Antireflexionsschicht genutzt werden kann. Somit ist in einem einzigem Arbeitsgang die notwendige Maskierung und die wünschenswerte Aufbringung der Antireflexionsschicht möglich.

In weiterer bevorzugter Ausgestaltung des Verfahrens ist vorgesehen, daß die aus einem alkalihaltigen Glas bestehende Lichtstrahlumlenkeinrichtung mit dem vorzugsweise als Siliziumsubstrat ausgebildeten Träger durch anodisches Bonden verbunden werden. Durch dieses anodische Bonden wird in einfacher Weise durch Anlegen einer Gleichspannung, wobei der Träger mit der Anode verbunden wird und gleichzeitige Erwärmung bis nahe der Glastemperatur eine sichere und dauerhafte Verbindung geschaffen.

Weitere vorteilhafte Ausgestaltungen der Erfindung ergeben sich in den übrigen in den Unteransprüchen genannten Merkmalen.

## Zeichnung

Die Erfindung wird nachfolgend in Ausführungsbeispielen anhand der zugehörigen Zeichnungen näher erläutert. Es zeigen:

Figur 1     einen Längsschnitt durch eine Ankoppelstelle einer Lichtleitfaser mit einem elektrooptischen Empfangselement und

Figur 2     einen Längsschnitt durch eine Ankoppelstelle einer Lichtleitfaser mit einem elektrooptischen Sendeelement.

## Beschreibung der Ausführungsbeispiele

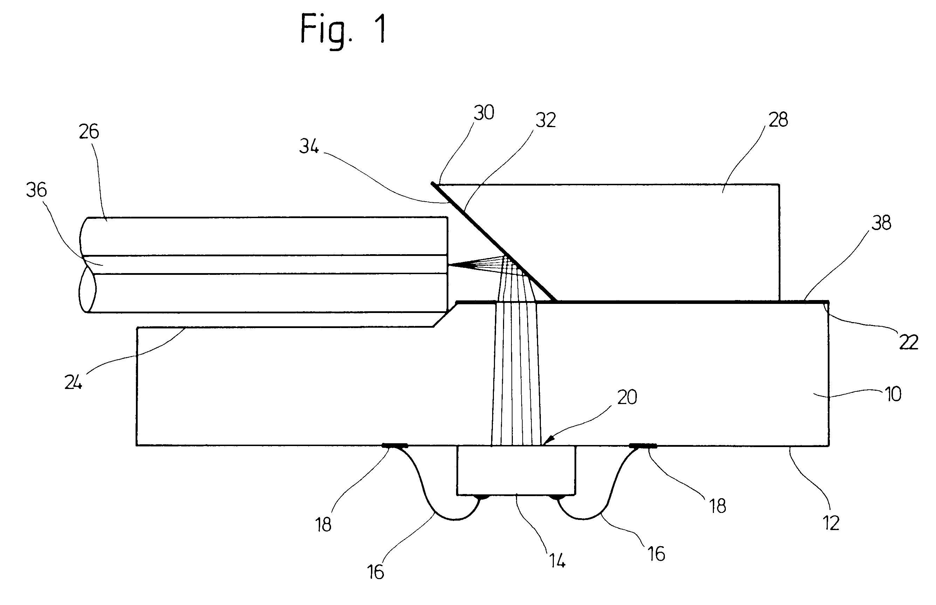

Figur 1 zeigt einen Träger 10, der Bestandteil eines hier nicht dargestellten hermetisch abgeschlossenen Gehäuses ist. Auf einer Seite 12 des Trägers 10 ist ein optoelektronisches Bauelement, beispielsweise eine Photodiode 14, angeordnet. Die Photodiode 14 ist mit hier angedeuteten Leitungen 16 mit auf der Seite 12 des Trägers 10 vorgesehenen Leiterbahnen 18 verbunden. Die Photodiode 14 ist so an den Träger 10 befestigt, daß sie mit ihrer lichtempfindlichen Fläche 20 an den Träger 10 anliegt. Auf der Seite 22 des Trägers 10 ist eine hier angedeutete V-förmige Führungsstruktur 24 vorgesehen, in der eine Lichtleitfaser 26 gelagert ist. Auf der Seite 22 des Trägers 10 ist weiterhin eine Lichtstrahlumlenkeinrichtung 20 angeordnet, die an einer der Lichtleitfaser zugewandten Stirnseite 30 eine Abschrägung 32 aufweist. Die Abschrägung 32 ist mit einer Verspiegelung 34, vorzugsweise mit einer dünnen Metallschicht, beispielsweise aus Gold, versehen. Die Lichtstrahlumlenkeinrichtung 28 ist so auf dem Träger 10 angeordnet, daß die Abschrägung 32 lateral zu einer optischen Achse 36 der Lichtleitfaser 26 liegt. Zwischen der Lichtstrahlumlenkeinrichtung 28 und dem Träger 10 ist eine Antireflexionsschicht 38 vorgesehen.

Die allgemeine Funktion der in Figur 1 gezeigten Anordnung ergibt sich daraus, daß ein über die Lichtleitfaser 26 herangeführtes optisches Signal innerhalb der optischen Achse 36 geführt wird und von dort auf die Verspiegelung 34 der Lichtstrahlumlenkeinrichtung 28 trifft und von dieser auf den Träger 10 reflektiert wird, auf dessen Seite 22 das optische Signal eintritt und auf dessen Seite 12 das optische Signal im Bereich der lichtempfindlichen Fläche 20 der Photodiode austritt. Die Photodiode 14 wandelt die optischen Signale in elektrische Signale um, die dann entsprechend an den Leiterbahnen 18 anliegen. Indem der Winkel zwischen der Verpiegelung 34 und der Seite 22 des Trägers 10 genau 45° beträgt, wird das optische Signal um 90° umgelenkt und trifft somit senkrecht auf die Oberfläche des Trägers 10.

Nachfolgend wird ein Verfahren zur Herstellung der in Figur 1 gezeigten Anordnung näher erläutert:

In der optischen Nachrichtentechnik werden Lichtwellenlängen in den beiden Bereichen um 1300 nm sowie 1550 nm eingesetzt. Das Halbleitermaterial Silicium hat eine Bandlücke von etwa 1100 nm und ist für Wellenlängen oberhalb dieses Bereiches hochtransparent. Silicium ist andererseits das Standardmaterial der Mikroelektronik und bietet sich daher auch als Substratmaterial für eine erste Verstärkerschaltung im Anschluß an die Photodiode 14 an. Neben seinen Eigenschaften als Material der Elektronik weist einkristallines Silicium zudem hervorragende mechanische Eigenschaften auf. Durch das anisotrope naßchemische Ätzen in alkalischen Medien (beispielsweise Kaliumhydroxid, KOH) lassen sich in Silicium hochpräzise mechanische Strukturen mit einer Genauigkeit im Mikrometerbereich herstellen. Es bietet sich daher an, die Gehäusewand aus einem Silicium-Wafer (Träger 10) herzustellen und somit die Funktionen der Faserpositionierung, der Montage und Kontaktierung der Photodiode 14 zu integrieren sowie die Gehäusewand gleichzeitig als Träger einer ersten Verstärkerschaltung einzusetzen. Der Wafer kann hierzu auf seiner Innenseite 12 mit einer elektrischen Isolationsschicht sowie einer strukturierten Metallisierung versehen werden, um Bondpads und/oder elektrische Leiterbahnen 18 zu definieren.

Die anisotrope naßchemische Ätztechnik wird eingesetzt, um auf der Außenseite 22 der Gehäusewand aus Silicium präzise Haltestrukturen für die Glasfaser anzubringen. Bei dieser Ätztechnik entstehen V-förmige Vertiefungen 24, die allseitig durch die (111)-Kristallebenen des Siliciums begrenzt werden und einen Winkel von 54.7° mit der Waferoberfläche 22, die durch eine (100)-Kristallebene gebildet wird, einschließen. Durch eine geeignete Maskierung des Wafers mit einer gegen das Ätzmedium resistenten Schicht aus z.B. Siliciumnitrid oder Siliciumdioxid können langgestreckte V-Gräben hergestellt werden, die zur hochpräzisen Positionierung von Lichtleitfasern 26 geeignet sind. Dabei liegt die optische Achse 36 der Lichtleitfaser 26 parallel zur Längsachse des geätzten Grabens.

Da die Haltestrukturen und damit die optische Achse 36 der Lichtleitfaser 26 parallel zur Waferoberfläche 22 liegen, das Licht aber durch den Wafer 10 hindurchstrahlen soll, wird eine geeignete Lichtstrahlumlenkeinrichtung angebracht. Hierzu wird das anodische Bonden eingesetzt. Hierbei wird der Siliciumwafer mit seiner polierten Oberfläche in Kontakt mit einer Platte aus einem speziellen alkalihaltigen Glas 28 gebracht. Durch Aufheizen beider Bondpartner (Siliciumwafer 10 und Bondglas 28) bis nahe an die Glastemperatur (typischerweise auf etwa 400 °C) erhalten die Natrium-Ionen ($Na^+$) des Glases 28 eine relativ hohe Beweglichkeit und können somit unter dem Einfluß eines äußeren elektrischen Feldes von der Grenzfläche zum Siliciumwafer 10 weggezogen werden. Hierbei wird der Wafer 10 als Anode geschaltet. Die Ladungsverschiebung setzt sich solange fort, bis durch die von den ortsfesten Sauerstoff-Ionen ($O^{2-}$) gebildete Raumladungszone ein Gegenfeld aufgebaut wird, das das von außen angelegte Feld kompensiert. Das Innere des Glases 28 ist somit feldfrei, und die gesamte elektrische Feldstärke fällt über der Raumladungszone und in dem Bereich zwischen Glas 28 und Siliciumwafer 10 ab. Das Feld in diesem Zwischenbereich bewirkt eine starke elektrostatische Anziehung, durch die beide Bondpartner in so engen Kontakt gebracht werden, daß sich eine chemische Verbindung zwischen den Sauerstoff-Ionen des Glases 28 und des Siliciumwafers 10 ausbildet, die auch nach Abkühlung und Abschalten des elektrischen Feldes bestehen bleibt.

Eine Scheibe aus z.B. Pyrexglas wird, wie in Figur 1 dargestellt, an der Stirnfläche 30 unter einem Winkel von 45° geschliffen und poliert. Die polierte Stirnfläche 30 wird in einem Aufdampfoder Sputterprozeß zur Herstellung einer spiegeln-den Oberfläche mit einer dünnen Metallschicht 32 (beispielsweise Gold) belegt. Die Glasplatte 28 wird auf der Außenseite 22 der Gehäusewand 10 so positioniert, daß das aus der Lichtleitfaser 26 austretende Lichtbündel auf die polierte und verspiegelte Stirnseite 30 trifft. Infolge des Winkels von 45°, den die Stirnseite 30 mit der Glasoberfläche bildet, wird der Lichtstrahl um 90° umgelenkt und trifft somit senkrecht auf die Waferoberfläche. Die Glasplatte 28 wird in dieser Position bei erhöhter Temperatur und unter Anlegen eines elektrischen Feldes anodisch gebondet.

Beim Eintritt des Lichtes in den Siliciumwafer 10 wird ein Teil der Intensität an der Grenzfläche Luft-Silicium reflektiert. Der Reflexionsgrad hängt von der Differenz der Brechungsindizes beider Medien ab und beträgt bei Luft/Silicium etwa 30%. Zur Verringerung der durch die Reflexion bewirkten optischen Verluste ist die Oberfläche des Siliciumwafers 10 mit einer Antireflexionsschicht 38 versehen. Da bei dem optischen Empfangsmodul nur eine genau definierte Lichtwellenlänge eingesetzt wird, entfällt die Notwendigkeit einer breitbandigen Entspiegelung. Die Antireflexionsschicht 38 kann aus einer einzigen Schicht mit einem Brechungsindex n bestehen, der sich als geometrisches Mittel aus den Brechungsindizes $n_o$ von Luft und $n_s$ von Silicium berechnet:

$$n = \sqrt{n_o \times n_s}$$

Die Schichtdicke d muß so gewählt werden, daß die optische Weglänge bei zweimaligem Durchlaufen der Schicht gerade einer halben Lichtwellenlänge entspricht:

$$n \times d = \frac{\lambda}{4}$$

Bei Silicium mit einer Brechzahl von etwa 3.8 beträgt mit $n_o = 1$ der notwendige Schichtindex = 1.95 und die Schichtdicke d = 199 nm für $\lambda$ = 1550 nm und d = 237 nm für $\lambda$ = 1300 nm.

In der Mikromechanik hat sich das Dielektrikum Siliciumnitrit ($Si_3N_4$) als Passivierungsschicht bei der Herstellung von anisotrop geätzten Strukturen bewährt. Siliciumnitrid besitzt einen Brechungsindex von 2.0 und kommt somit dem optimalen Index von 1.95 sehr nahe. Zur Gewährleistung einer optimalen Einspiegelung kann durch Beimengung eines sauerstoffhaltigen Gases während des Abscheideprozesses jedoch auch eine sogenannte Siliciumoxinitridschicht hergestellt werden, deren Brechungsindex durch den Sauerstoffgehalt genau auf den gewünschten Wert eingestellt werden kann. Für eine hochwertigere Entspiegelung können Mehrschichtsysteme aus z.B. Siliciumdioxid und Siliciumnitrid eingesetzt werden. Auch Schichten aus Siliciumoxinitrid sowie Mehrschichtsysteme aus Siliciumoxid und Siliciumnitrid sind als Passivierungsschichten für die Mikrostrukturierung geeignet.

Der Prozeß des anodischen Bondens kann außer auf freien Siliciumoberflächen auch auf Siliciumwafern durchgeführt werden, die mit dünnen dielektrischen Schichten bedeckt sind. Es bietet sich daher an, die Antireflexionsschicht 38 aus Siliciumnitrid oder siliciumoxinitrid mit geeigneter Schichtdicke herzustellen und die Schicht gleichzeitig als Maske für die Herstellung des Lichtleitfaser-Positioniergrabens 24 durch anisotropes Ätzen zu verwenden. Die Pyrexplatte 28 mit der spiegelnden Stirnfläche 30 wird anschließend auf dieses Dielektrikum gebondet.

Um die Lage des Lichtleitfaserendes und der Photodiode 14 relativ zueinander festzulegen, muß die Mikromechanikstruktur auf der Außenseite 22 zur Lage der Photodiode 14 auf der Innenseite 12, die durch die Metallstruktur festgelegt ist, justiert werden. Dies kann durch die Photolithographie unter Einsatz eines zweiseitigen Belichtungsgerätes problemlos erfolgen. Weiterhin muß die Pyrexplatte 28 relativ zum V-Graben 24 justiert werden, was durch Anbringen geeigneter Justierstrukturen in der dielektrischen Schicht auf der Außenseite 22 und Ausrichten der Glasplatte 28 beim Bondprozeß erreicht wird. Da die Glasplatte 28 transparent ist, läßt sich eine solche Justierung problemlos durchführen. In einer weiteren Ausgestaltung des Verfahrens kann auch die Glasplatte in einer mikromechanisch angefertigten Vertiefung justiert und gebondet werden. Somit entfällt ein zusätzlicher Justageschritt.

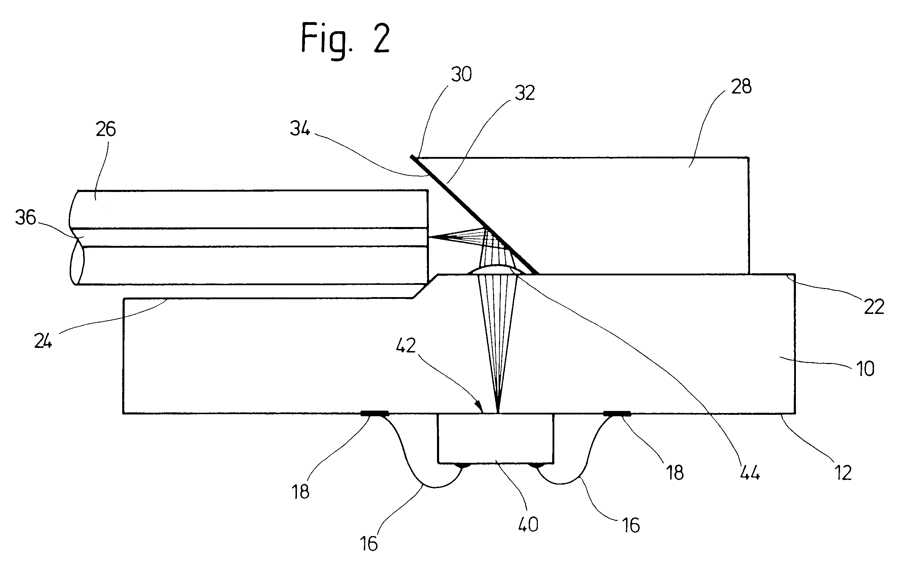

In Figur 2 ist eine Anordnung zur Ankopplung einer Lichtleitfaser an ein optisches Sendeelement gezeigt. Gleiche Teile wie in Figur 1 sind mit gleichen Bezugszeichen versehen und hier nicht nochmals erläutert. An der Seite 12 des Trägers 10 ist hier eine oberflächenimitierende Laserdiode 40 angeordnet, die mit ihrer lichtaussendenden Fläche 42 an dem Träger 10 anliegt. Auf der Seite 22 des Trägers 10 ist im Bereich der Abschrägung 32 der Lichtstrahlumlenkeinrichtung 28 eine Fokussiereinrichtung 44 angeordnet. Diese Fokussiereinrichtung 44 ist beispielsweise eine geodätische refraktive Linse oder eine in Planartechnik aufgebrachtes diffraktives optisches Element, beispielsweise eine als Fresnel-Stufenlinse ausgebildete Linse.

Die in Figur 2 angezeigte Anordnung übt folgende Funktion aus:
Die Laserdiode 40 wird über die Leiterbahnen 18 bzw. Leitungen 16 mit einem elektrischen Signal beaufschlagt und imitiert daraufhin an ihrer lichtaussendenen Fläche 42 ein optisches Signal. Dieses optische Signal wird durch den Träger 10 gesendet und trifft an der Seite 22 des Trägers 10 auf die Fokussiereinrichtung 44. Da die optischen Signale der Laserdiode 40 ein divergent austretendes Strahlenbündel sind, wird über die Fokussiereinrichtung 44 das Strahlenbündel auf die Verspiegelung 34 der Lichtstrahlumlenkeinrichtung 28 gebündelt, damit dieses von dort genau in die optische Achse 36 der Lichtleitfaser 26 umgelenkt werden kann.

Zu dem Aufbau und dem der Herstellung der in Figur 2 gezeigten Anordnung wird auf das bereits zu Figur 1 Gesagte hingewiesen.

Die in den Figuren 1 und 2 gezeigten Anordnungen sind lediglich beispielhaft, so können insbesondere auch mehrere Lichtleitfasern 26 parallel angeordnet sein, deren optische Achsen 36 gemeinsam einer entsprechend groß dimensionierten Verspiegelung 34 einer Lichtstrahlumlenkeinrichtung 28 gegenüberliegen. Weiterhin ist denkbar, daß die Lichtstrahlumlenkeinrichtung 28 an mehreren Stirnflächen Verspiegelungen 34 aufweisende Abschrägungen 32 besitzt, so daß aus mehreren Richtungen Lichtleitfasern 26 herangeführt werden können. Weiterhin ist die Anordnung mehrerer optischer Sende- und/oder Empfangselemente denkbar, wobei diese selbstverständlich auch kombiniert vorgesehen sein können, so daß mit dem hier geschilderten grundsätzlichen Aufbau komplexe Kopplungs- oder Verteileranordnungen geschaffen werden können.

Die in den Figuren 1 und 2 gezeigten Anordnungen bieten insbesondere den Vorteil, daß ein Träger 10 gleichzeitig für die Halterung und Justierung von Lichtleitfasern 26 sowie von optischen oder elektrooptischen Elementen 14 und 40 genutzt werden kann, wobei die zu den optischen Elementen führenden Leiterbahnen gleichzeitig in den Träger 10 integriert sein können. Da der Träger 10, wie erwähnt aus einem Siliciumsubstrat besteht, kann dieses gleichzeitig sehr vorteilhaft für die Ausbildung einer eventuellen Verstärkerschaltung mitbenutzt werden, so daß zusätzliche Träger unnötig werden.

**Patentansprüche**

1. Anordnung zur Ankopplung wenigstens einer Lichtleitfaser an wenigstens ein optisches Empfangsoder Sendeelement, **dadurch gekennzeichnet**, daß die Lichtleitfaser (26) und das optische Element (14, 40) an gegenüberliegenden Seiten (12, 22) eines gemeinsamen Trägers (10) angeordnet sind.

2. Anordnung nach Anspruch 1, **dadurch gekennzeichnet**, daß der Träger (10) Teil einer Gehäusewandung eines hermetisch dichten Gehäuses ist, in dem das optische Element (14, 40) angeordnet ist.

3. Anordnung nach einem der vorhergehenden Ansprüche, **dadurch gekennzeichnet**, daß der Träger (10) aus einem optisch transparenten Material, insbesondere einem Siliciumwafersubstrat, besteht.

4. Anordnung nach einem der vorhergehenden Ansprüche, **dadurch gekennzeichnet**, daß die Lichtleitfaser (26) mit ihrer optischen Achse (36) parallel zu den Seiten (12, 22) des Trägers (10) angeordnet ist.

5. Anordnung nach einem der vorhergehenden Ansprüche, **dadurch gekennzeichnet**, daß der Lichtleitfaser (26) eine im Bereich der optischen Achse (36) angeordnete Lichtstrahlumlenkeinrichtung (28) zugeordnet ist.

6. Anordnung nach einem der vorhergehenden Ansprüche, **dadurch gekennzeichnet**, daß die Lichtstrahlumlenkeinrichtung (28) ein alkalihaltiges Glas ist.

7. Anordnung nach einem der vorhergehenden Ansprüche, **dadurch gekennzeichnet**, daß eine der Lichtleitfaser (26) zugeordnete Stirnfläche (30) der Lichtstrahlumlenkeinrichtung (28) eine zu dem Träger (10) gewendete Abschrägung (32) aufweist.

8. Anordnung nach einem der vorhergehenden Ansprüche, **dadurch gekennzeichnet**, daß die Abschrägung (32) in einem Winkel von 45° verläuft.

9. Anordnung nach einem der vorhergehenden Ansprüche, **dadurch gekennzeichnet**, daß das optische Element (14, 40) im Bereich der Abschrägung (32) an der gegenüberliegenden Seite (12) des Trägers (10) mit seinem lichtempfindlichen Bereich (20, 42) angeordnet ist.

10. Anordnung nach einem der vorhergehenden Ansprüche, **dadurch gekennzeichnet**, daß zwischen dem Träger (10) und der Lichtstrahlumlenkeinrichtung (28) der Träger (10) wenigstens im Bereich der Abschrägung (32) mit einer Antireflexionsschicht (38) versehen ist.

11. Anordnung nach einem der vorhergehenden Ansprüche, **dadurch gekennzeichnet**, daß die Abschrägung (32) verspiegelt ist.

12. Anordnung nach einem der vorhergehenden Ansprüche, **dadurch gekennzeichnet**, daß die Abschrägung (32) mit einer dünnen Metallschicht, vorzugsweise einer Goldschicht, beschichtet ist.

13. Anordnung nach einem der vorhergehenden Ansprüche, **dadurch gekennzeichnet**, daß die Antireflexionsschicht (38) einen Brechungsindex (n) besitzt, der sich aus dem geometrischen Mittel der Brechungsindizes von Luft ($n_1$) und des Trägers ($n_2$) ergibt.

14. Anordnung nach einem der vorhergehenden Ansprüche, **dadurch gekennzeichnet**, daß die Antireflexionsschicht (38) eine Dicke (d) aufweist, die bei zweimaligem Durchlaufen der Antireflexionsschicht (38) einer halben Licht-wellenlänge ($\lambda$) entspricht.

15. Anordnung nach einem der vorhergehenden Ansprüche, **dadurch gekennzeichnet**, daß die Antireflexionsschicht (38) aus Siliciumnitrid besteht.

16. Anordnung nach einem der vorhergehenden Ansprüche, **dadurch gekennzeichnet**, daß die Antireflexionsschicht (38) aus Siliciumoxinitrid besteht.

17. Anordnung nach einem der vorhergehenden Ansprüche, **dadurch gekennzeichnet**, daß die Antireflexionsschicht (38) aus einem Mehr-schichtaufbau aus Siliciumoxid und Siliciumni-trid besteht.

18. Anordnung nach einem der vorhergehenden Ansprüche, **dadurch gekennzeichnet**, daß die Position der Lichtleitfaser (26) durch eine vorzugsweise anisotrop eingeätzte V-förmige Führungsstruktur (24) bestimmt wird.

19. Anordnung nach einem der vorhergehenden Ansprüche, **dadurch gekennzeichnet**, daß im Bereich der Abschrägung (32) auf der dem optischen Element (40) gegeüberliegenden Seite (22) des Trägers (10) eine Fokussiereinrichtung (44) angeordnet ist.

20. Anordnung nach einem der vorhergehenden Ansprüche, **dadurch gekennzeichnet**, daß die Fokussiereinrichtung (44) eine geodätische refraktive Linse ist.

21. Anordnung nach einem der vorhergehenden Ansprüche, **dadurch gekennzeichnet**, daß die Fokussiereinrichtung (44) ein diffraktives optisches Element ist.

22. Anordnung nach einem der vorhergehenden Ansprüche, **dadurch gekennzeichnet**, daß der Träger (10) an der das optische Element (14, 40) liegenden Seite (12) wenigstens die mit dem optischen Element (14, 40) verbindbaren Leiterbahnen (18) aufweist.

23. Anordnung nach einem der vorhergehenden Ansprüche, **dadurch gekennzeichnet**, daß in dem Träger (10) eine Verstärkerschaltung integriert ist.

24. Verfahren zur Herstellung einer Anordnung zur Ankopplung wenigstens einer Lichtleitfaser an wenigstens ein optisches Empfangs- oder Sendeelement, **dadurch gekennzeichnet**, daß

auf einem optischen transparenten Träger (10), insbesondere einem Siliciumsubstrat, auf sich gegenüberliegenden Seiten (12, 22) einerseits eine Führungsstruktur (24) für die Lichtleitfaser und andererseits eine Halte-struktur für das optische Element (14, 40) eingearbeitet werden.

25. Verfahren nach Anspruch 23, **dadurch gekennzeichnet**, daß die Führungsstruktur (24) für die Lichtleitfaser anisotrop eingeätzt wird.

26. Verfahren nach einem der vorhergehenden Ansprüche, **dadurch gekennzeichnet**, daß das Siliciumsubstrat vor dem Ätzschritt mit einer gegen das Ätzmedium resistenten Schicht maskiert wird.

27. Verfahren nach einem der vorhergehenden Ansprüche, **dadurch gekennzeichnet**, daß als resistente Schicht Siliciumnitrid, Siliciumoxinitrid oder ein Mehrschichtsystem aus Siliciumoxid und Siliciumnitrid aufgebracht wird.

28. Verfahren nach einem der vorhergehenden Ansprüche, **dadurch gekennzeichnet**, daß auf der der Lichtleitfaser (26) abgewandten Seite (12) des Trägers (10) eine elektrische Isolationsschicht und/oder eine Leiterbahnen (18) bildende strukturierte Metallisierung aufgebracht wird.

29. Verfahren nach einem der vorhergehenden Ansprüche, **dadurch gekennzeichnet**, daß auf der die Lichtleitfaser (26) aufnehmenden Seite (22) des Trägers (10) mit der Führungsstruktur (24) fluchtend ein alkalihaltiges Glas (28) aufgebracht wird, dessen oberer Abschluß über der optischen Achse einer in die Führungsstruktur (24) eingelegten Lichtleitfaser (26) liegt.

30. Verfahren nach einem der vorhergehenden Ansprüche, **dadurch gekennzeichnet**, daß das alkalihaltige Glas (28) auf den Träger (10) anodisch aufgebondet wird.

31. Verfahren nach einem der vorhergehenden Ansprüche, **dadurch gekennzeichnet**, daß das System aus alkalihaltigem Glas (28) und Träger (10) bis nahe an die Glastemperatur erwärmt wird.

32. Verfahren nach einem der vorhergehenden Ansprüche, **dadurch gekennzeichnet**, daß an den Träger (10) und das alkalihaltige Glas (28) eine Gleichspannung angelegt wird, wobei die Anode an dem Träger (10) liegt.

**33.** Verfahren nach einem der vorhergehenden Ansprüche, **dadurch gekennzeichnet**, daß das alkalihaltige Glas (28) vor dem Aufbonden mit einer verspiegelten Anschrägung (32) versehen wird.

**34.** Verfahren nach einem der vorhergehenden Ansprüche, **dadurch gekennzeichnet**, daß zwischen dem alkalihaltigen Glas (28) und dem Träger (10) vor dem Aufbonden eine Antireflexionsschicht (38), vorzugsweise aus Siliciumnitrid, auf den Träger (10) aufgebracht wird.

**35.** Verfahren nach einem der vorhergehenden Ansprüche, **dadurch gekennzeichnet**, daß der Brechungsindex der Antireflexionsschicht (38) durch Beimengung eines sauerstoffhaltigen Gases eingestellt wird.

**36.** Verfahren nach einem der vorhergehenden Ansprüche, **dadurch gekennzeichnet**, daß die zur Bildung der Ätzmaske für die Führungsstruktur (24) dienende Schicht gleichzeitig als Antireflexionsschicht (38) genutzt wird.

**37.** Verfahren nach einem der vorhergehenden Ansprüche, **dadurch gekennzeichnet**, daß auf der Seite (22) des Trägers (10) vor Aufbonden des alkalihaltigen Glases (28) im Bereich der Anschrägung (32) ein diffraktives optisches Element (44) in Planartechnik aufgebracht wird.

Fig. 1

Fig. 2

**Europäisches Patentamt**

**EUROPÄISCHER RECHERCHENBERICHT**

Nummer der Anmeldung

EP 94 11 0880

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| X | DE-A-41 06 721 (ANT) <br> * Spalte 2, Zeile 31 - Spalte 3, Zeile 15; Ansprüche 3,4; Abbildungen 2,3 * <br> --- | 1-5,22 | G02B6/00 <br> G02B6/42 |
| X | EP-A-0 535 690 (SUMITOMO) <br><br> * Spalte 6, Zeile 21 - Spalte 7, Zeile 21; Anspruch 11; Abbildung 6 * <br> --- | 1,3-5,7, 9,24 | |
| A | DE-A-35 43 558 (LICENTIA) <br><br> * Spalte 2, Zeile 52-60; Ansprüche 1-4; Abbildungen 1,2 * <br> --- | 1-9,22, 23 | |
| A | EP-A-0 366 974 (TELEFUNKEN) <br><br> * Spalte 4, Zeile 18-22; Ansprüche 6,10 * <br> --- | 6,8,19, 29,30 | |
| A | DE-C-39 14 835 (ANT) <br><br> * Ansprüche 4-6 * <br> --- | 10-12, 23,28 | |
| A | WO-A-87 04566 (AMERICAN TELEPHONE AND TELEGRAPH) <br> * das ganze Dokument * <br> ----- | | **RECHERCHIERTE SACHGEBIETE (Int.Cl.6)** <br><br> G02B |

Der vorliegende Recherchenbericht wurde für alle Patentansprüche erstellt

| Recherchenort | Abschlußdatum der Recherche | Prüfer |
|---|---|---|
| BERLIN | 20. Oktober 1994 | Fuchs, R |